# EUROPEAN PATENT SPECIFICATION

(11) **EP 0 973 382 B1**
(45) Date of publication and mention of the grant of the patent: **05.02.2003**
(21) Application number: 97952781.9
(22) Date of filing: 14.11.1997
(51) Int. Cl.: A01M 21/04

(54) **PLANT FOR THE CONTROLLED DIFFUSION OF ACTIVE SUBSTANCES IN CULTIVATION AND IN DEFENCE AGAINST PARASITES IN AGRICULTURE**
VORRICHTUNG FÜR DIE KONTROLLIERTE DIFFUSION VON AKTIVEN STOFFEN IN PFLANZENZUCHT UND SCHUTZ VOR PARASITEN IN DER LANDWIRTSCHAFT
INSTALLATION POUR L'APPORT REGULE DE SUBSTANCES ACTIVES AUX CULTURES ET POUR LA LUTTE CONTRE LES PHYTOPARASITES

(30) Priority: 15.11.1996 IT MO960149
(43) Date of publication of application: 26.01.2000
(73) Proprietor: ISAGRO S.p.A., 20124 Milano (IT)
(72) Inventor: Pratizzoli, William, 41036 Medolla (IT)
(74) Representative: De Gregori, Antonella
(86) International application number: EP9706439
(87) International publication number: WO98020730

(56) References cited:
- EP-A- 0 128 825
- EP-A- 0 347 982
- WO-A-90/14896
- FR-A- 1 475 889

## Description

This invention relates to a plant for the controlled diffusion of vaporizable active substances in agriculture and in defence against parasites, in particular in applying the technique of sexual confusion and disorientation.

Systems currently used for the diffusion of active substances which act in the vapour state are of two types, namely systems which project the substance mixed with water, either solubilized or microencapsulated, towards the vegetation, or systems used mainly with pheromones in the technique of sexual disorientation and confusion, which exploit the capacity of certain materials to be partially permeable or to absorb the substances and release them with time. This is the principle on which dispensers operate in sexual confusion and disorientation.

The first system results in product losses by distribution and degradation, whereas the second allows operation with low doses of active substance but requires manual repositioning of the diffusers at least annually, any increase in the number of diffusion points and in the number of insects simultaneously controllable being achieved only by positioning new and different diffusers at a cost proportional to the number of diffusers applied. The system is also characterised by a certain rigidity in that the quantity of diffused active substance is not readily controllable on the basis of defence requirements, but is influenced by environmental parameters which cannot be modified, the active substance diffused being modifiable only by applying further dispensers.

The object of the present invention is to provide a plant which allows moment-by-moment control of the quantities of the individual active compounds to be simultaneously diffused into the environment concerned in the operation, with considerable advantages in terms of active substance economy, this being diffused only when required, of reliability and of efficiency of the system, which is able to cope with environmental situations requiring immediate variations in the quantity of active substance diffused and is able to increase the diffusion points without additional cost. In addition, it is possible, in the struggle against insects using sexual confusion and disorientation techniques, to simultaneously control several insects without cost increase due to additional diffusers, but considering only the active substance cost.

Further advantages are practicality of use, complete automation of all operations, and finally the possibility of maintaining any unused active substance under ideal conditions for preserving its specific characteristics, away from light and air.

These and further advantages are all attained by a plant for the controlled diffusion of vaporizable active substances,
characterised by consisting of a diffuser in the form of ribbon or filament of considerable length, joined at its ends to create an endless closed-circuit line positioned within the environment the subject of the diffusion along a predetermined path, said diffuser being slidable along the path and movable by traction mechanisms, and being charged with the active substances directly in the field by a charging apparatus positioned along the path of the diffuser and consisting of distributers able to transfer small quantities of the active substance to be vaporized onto small portions of defined segments of the movable ribbon or filament used as the diffuser, said segments being dedicated to the diffusion of a single substance and being locatable on the ribbon or filament by suitable sensors for optical or other signs printed on the ribbon or filament in other segments dedicated to this purpose, the movement of the diffuser relative to the distributer within the dedicated segment of the ribbon or filament being measurable by a similar method, the quantity of active substance deposited on the diffuser being then adjustable roughly and occasionally by varying the structure of the distributer, and adjustable finely and continuously by regulating the time involved in distributing the active compound on the diffuser and the speed of advancement of the diffuser, there being controlled both the movement of the diffuser ribbon or filament, and the time of operation of the individual distributers in distributing active substance onto the diffuser, by a microprocessor on the basis of predefined time programs having as variables environmental parameters measured by suitable sensors connected to the microprocessor.

Further characteristics and advantages will be more apparent from the description of a preferred but not exclusive embodiment of a plant for the controlled diffusion of active substances in defence against insects using the technique of sexual disorientation or confusion.

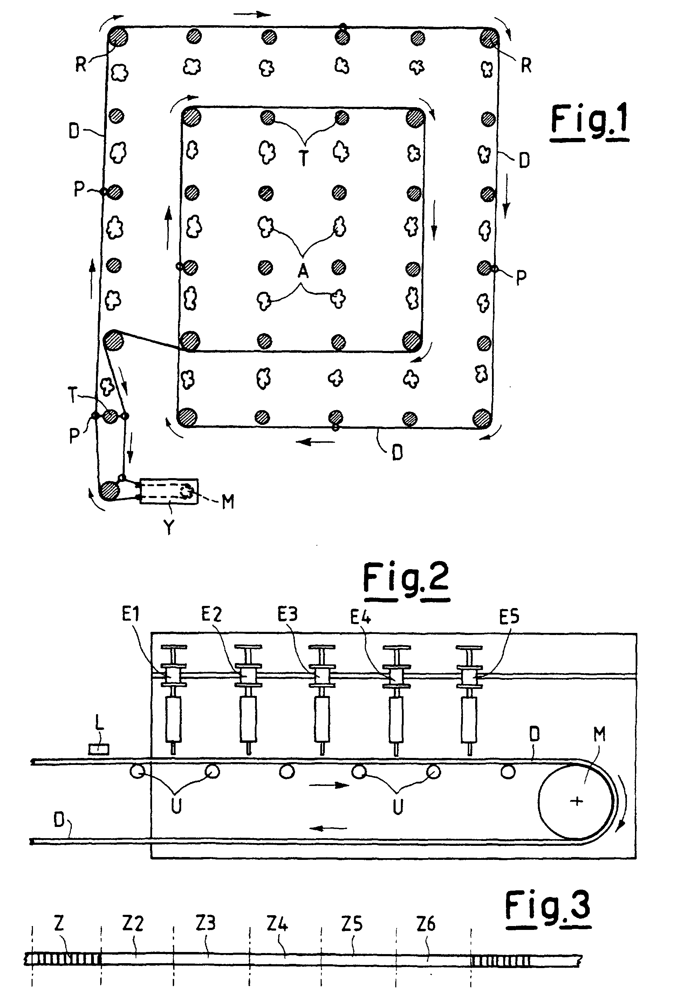

Figure 1 is a schematic plan view showing a possible path of the diffuser ribbon or filament in an apple tree cultivation; Figure 2 shows very schematically a possible structure for the apparatus for charging the diffuser ribbon or filament with active substances; Figure 3 shows a portion of diffuser ribbon or filament with a possible system for locating, by colour bands, the segments dedicated to diffusion; this arrangement is suitable for the charging apparatus shown in Figure 2.

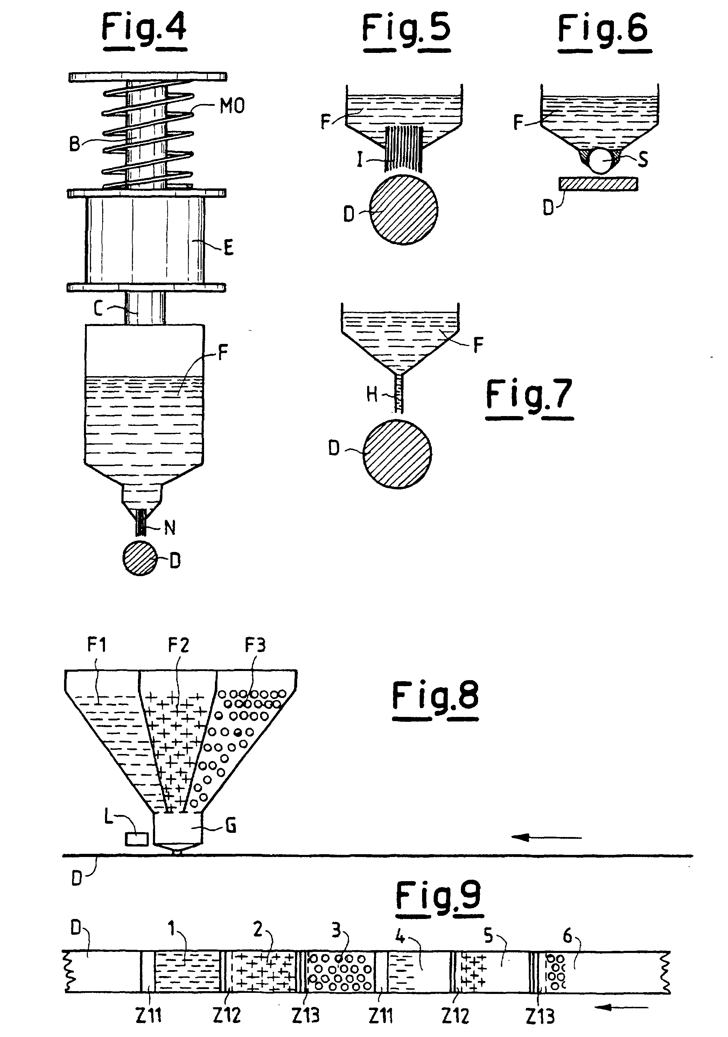

Figure 4 shows, enlarged compared with Figure 2, a distributer element for active substance in the liquid state, in this case pheromone, of the charging apparatus of Figure 2; Figures 5, 6 and 7 show three possible structures for the end part of the distributer element which lies in proximity to the diffuser ribbon or filament to be charged, this latter being shown as a ribbon or filament in section; Figure 8 shows a further possible structure of the charging apparatus with jet operation for distributing three different active substances; Figure 9 shows on the diffuser a possible arrangement of those segments dedicated to location and two possible quantitative levels of active compound charge on the segments dedicated to diffusion; this arrangement is suitable for the charging apparatus of Figure 8.

With reference to Figure 1, D indicates the diffuser consisting of an endless ribbon or filament, the diffuser being supported and guided along the path defined by rollers R and eyelets P mounted on the poles T supporting the plants indicated by A. Along the path, in a position comfortable for normal maintenance, there is situated the active substance charging apparatus Y inside which, in this case, there is also provided the drive pulley M for driving the ribbon or filament along the path. The arrows indicate the direction of movement of the diffuser along the path. It should be noted that along the diffuser path, which is particularly suitable for applying the sexual confusion or disorientation technique, the most recently charged and hence most active segments of the diffuser are positioned on the outside, and only subsequently are they brought to the inside, a region in which a lesser concentration of active substance is acceptable.

In Figure 2, E1, E2, E3, E4 and E5 indicate five distributers for five different active substances and controlled by microprocessors, D indicates the diffuser ribbon or filament supported by rollers U and driven by the drive pulley M controlled by microprocessors. L indicates an optical reader able to sense colour variations printed on the diffuser (black bars) and to continuously feed the processor with information on the position of the diffuser ribbon or filament. Figure 3 shows a possible dedicated segment distribution along a diffuser portion; Z, showing 10 black bars, indicates the segment dedicated to providing information on the position of the next segments; the 10 bars correspond to 10 positions on each of the next five segments, Z2, Z3, Z4, Z5 and Z6, which are each dedicated to receiving, transporting and diffusing the corresponding different active substance.

In Figure 4, MO indicates a spring, E indicates an electrical winding within which the iron core B visible through the spring turns is free to move, and C indicates a connection of non-ferrous material between the core and the reservoir for the active substance F. The reservoir contains the active substance F which is able to reach the diffuser ribbon D, shown in section, only by the distributer terminal part N making contact with the diffuser ribbon or filament.

In the successive Figures 5, 6 and 7, F indicates the active substance, I indicates a capillary transport element for liquids, S indicates a ball and H indicates a tube of capillary dimensions, while D again indicates the diffuser shown in section.

In Figure 8, F1, F2 and F3 indicate three different active compounds, also highlighted by different symbols, contained in the reservoirs of the jet charging apparatus, and G indicates the jet distributer which deposits the active substances on the diffuser D, L is an optical reader.

In Figure 9, Z11, Z12 and Z13 indicate the segments dedicated to identifying the next segment 1, 2 and 3 and 4, 5 and 6 respectively, these being dedicated exclusively and respectively to diffusion of the active compounds F1, F2 and F3. The symbols which differentiate the various liquids in the distributer reservoir shown in Figure 8 and represented on the six dedicated segments of the diffuser in Figure 9, represent two possible quantitative charging levels of the three substances onto the diffuser.

With regard to plant operation, the drive pulley M transmits motion to the diffuser, and the distributers deposit defined quantities of active substance on the diffuser in relation to their operating time and the speed of travel of the diffuser ribbon or filament. The movement of the diffuser distributes the segments charged with the active substances along the defined path and hence into the environment concerned in the diffusion.

Said segments diffuse the vaporizable active compound.

Depending on requirements and the rate of vaporization of the active substance, the diffuser can either move continuously and the dedicated segments be continuously charged, or be programmed to effect a complete periodic revolution (for example daily), and hence in the period considered each dedicated segment will be charged only once.

The quantity of compound (pheromone) distributed on the surface can hence be readily varied on the basis of the dedicated segment length charged and of the charging frequency.

As interference between the different compounds is possible, the diffuser has been divided into segments dedicated to diffusion, ie segments proposed for transporting and diffusing a single active compound during the progress of the diffuser revolutions through the path, and segments dedicated to identifying and recognizing the aforesaid diffuser segments and sensing the movements of the diffuser relative to the active substance distributers.

In practice the reader, indicated in the figures by L and which can be optical or magnetic, reads the message on the diffuser ribbon or filament and feeds the data to the processor, which on the basis of the information received locates the segment dedicated to the diffusion of a certain substance and causes the distributer to charge it with the said substance, in the case of Figure 4 by bringing the distributer into contact with the ribbon by the electromagnet E. The dedicated segment length covered by the substance, which in the final analysis defines the quantity of substance diffused, is determined by the processor program and by environmental variables, and is controlled by the optical or magnetic reader or by electronic angular sensors positioned on drive or driven pulleys inserted into the path of the diffuser. The invention conceived in this manner is susceptible to modifications, all falling within the scope of the inventive concept. Moreover all details can be replaced by others technically equivalent.

In practice, the materials used and the dimensions and the form of the paths and ribbons or filaments used as diffusers, the arrangement of the diffusers and their number, and the number of active substances diffused can be chosen at will according to requirements, without on this account leaving the scope of protection of the following claims.

## Claims

1. A plant for the controlled diffusion of vaporizable active substances in cultivation and in defense against parasites in agriculture, comprising a diffuser, a charging apparatus, sensors for optical or other sign and a microprocessor, **characterised in that**:
- the diffuser being in form of a ribbon or filament of considerable length, joined at its ends to create an endless closed-circuit line positioned within the environment subject of the diffusion, said diffuser being slidable along a predetermined path by traction mechanisms, optical or other signs being printed onto predetermined segments of said diffuser, said optical or other signs being dedicated to the localization of the segments dedicated to the diffusion of a single substance and to control the movement of the diffuser relative to active substance distributors;
- the apparatus for charging the active substances being placed along the path of the diffuser, said apparatus consisting of distributors able to transfer small quantities of the active substance to be vaporized onto small portions of predetermined segments of the movable ribbon or filament uses as the diffuser, said segments being dedicated exclusively to the diffusion of a single substance and being locatable on the ribbon or filament by an optical reader or magnetic reader, the movement of the diffuser relative to the distributor within the dedicated segment of the ribbon or filament being similarly measurable, the quantity of active substance deposited on the diffuser being adjustable roughly and occasionally by varying the mechanical structure of the distributor and adjustable finely and continuously by regulating the time involved in distributing the active compound on the diffuser and the speed of advancement of the diffuser, there being controlled both the movement of the ribbon or filament and the time of operation of the individual distributors in distributing active substance onto the diffuser by a microprocessor on the basis of predefined time programs having as variables environmental parameters measured by suitable sensors connected to the microprocessor;
- the sensors for optical or other signs printed on the diffuser being connected to the microprocessor.

2. A plant as claimed in claim 1, wherein the diffuser filament or ribbon is of plastic construction.

3. A plant as claimed in claim 1 or 2, wherein the diffuser is of metal construction.

4. A plant as claimed in claim 1, or 2 or 3 wherein the diffuser is of plastic and metal construction.

5. A plant as claimed in claim 1, wherein the individual segments dedicated to the diffusion of the specific active substance are located by the optical reading of bar codes printed on the diffuser.

6. A plant as claimed in claim 1 or 4, wherein the individual segments dedicated to the diffusion of the specific active substance are located by magnetic reading.

7. A plant as claimed in claim 1, wherein if diffusion of a single substance or diffusion of compatible substances to be diffused successively on the same diffuser segment is required, it is not necessary to identify the dedicated segments, and hence the signals and the equipment related to them are not required, the diffuser advancement being able to be evaluated on the basis of the revolutions or part revolutions of the drive pulley or of a driven pulley.

8. A plant as claimed in claims 1, 2, 3, 4, 5, 6 and 7, wherein the active substance to be diffused is a phytopharmaceutical substance for the struggle against cryptogams.

9. A plant as claimed in claims 1, 2, 3, 4, 5, 6, 7 and 8, wherein the active substance to be diffused is a phytopharmaceutical substance for the struggle against parasite insects.

10. A plant as claimed in claims 1, 2, 3, 4, 5, 6, 7, 8 and 9, wherein the active substance to be diffused is a plant development regulator.

11. A plant as claimed in claims 1, 2, 3, 4, 5, 6, 7, 8, 9 and 10, wherein the active substance to be diffused is a decoy for pronuba insects.

12. A plant as claimed in claim 1, wherein the substances to be diffused are solid, charging being effected by rubbing the solid against the moving diffuser.

13. A plant as claimed in claim 1, wherein the diffuser is charged with the liquid active substance contained in the distributer reservoir by contact or rubbing of the tip of the distributer against the diffuser while at rest or while moving, said tip being manufactured from a bunch of fibres able to absorb and to transfer onto the diffuser the constituent liquid of the active substance.

14. A plant as claimed in claim 1 or 12 or 13, wherein the diffuser is charged with the liquid active substance contained in the distributer reservoir by contact or sliding of the tip of the distributer against the diffuser while at rest or while moving, said tip being manufactured from a ball, of which the surface in contact with the liquid is able to be wetted with, and to transfer onto the diffuser, the constituent liquid of the active substance.

15. A plant as claimed in claim 1 or 12 or 13 or 14, wherein the diffuser is charged with the liquid active substance contained in the distributer reservoir by a jet of small quantities of the constituent liquid of the active substance.

16. A plant as claimed in claim 1, wherein the environmental parameters measured by the sensors connected to the microprocessor include the active substance concentration measured by an electronic sensor.

17. A plant as claimed in claim 1, wherein the plant functions are controlled by radio contact with a control centre not adjacent to the site concerned with the active substance diffusion.

18. A plant as claimed in claim 1, wherein along its path the diffuser is supported and guided by rollers and eyelets, it being maintained under tension by tensioners and driven by one or more drive pulleys.

19. A plant as claimed in claim 1, wherein on the diffuser there are segments present dedicated to pheromones, insecticides, fungicides, acaricides, phytoregulators and repellent substances.

20. A plant as claimed in claim 1, wherein the environment the subject of the diffusion is used for product protection.

## Patentansprüche

1. Anlage für die kontrollierte Diffusion von verdampfbaren, aktiven Substanzen beim Kultivieren und als Abwehr gegen Parasiten in der Landwirtschaft, umfassend einen Diffusor, eine Beladevorrichtung, Sensoren für optische und andere Signale und einen Mikroprozessor, **dadurch gekennzeichnet, dass**;
- der Diffusor die Form eines Bandes oder Filaments von beträchtlicher Länge aufweist, dessen Enden miteinander verbunden sind, um eine endlose geschlossene Kreislinie zu bilden, welche innerhalb der Umgebung angeordnet wird, in der die Diffusion stattfinden soll, wobei der Diffusor entlang einem vorgegebenem Weg durch einen Traktionsmechanismus entlang gleitend bewegbar ausgebildet ist, dass optische oder andere Signale auf vorgegebene Segmente des Diffusors aufgedruckt sind, welche optischen oder anderen Signale zur örtlichen Bestimmung der Segmente vorgesehen sind, in denen eine Diffusion einer einzelnen Substanz geschehen soll und zur überwachung der Bewegung des Diffusors relativ zu Verteilern für aktive Substanzen;
- eine Vorrichtung zum Beladen mit aktiven Substanzen, welche entlang dem Weg des Diffusors angeordnet ist, wobei die Vorrichtung aus Verteilern besteht, welche in der Lage sind, kleine Mengen der aktiven Substanz, die zu Verdampfen ist, auf kleine Teile von vorgegebenen Segmenten des beweglichen Bandes oder Filaments zu übertragen, welche als Diffusor verwendet werden, wobei die Segmente ausschließlich der Diffusion einer einzelnen Substanz dienen und auf dem Band oder Filament durch einen optischen oder magnetischen Lesemechanismus erkennbar sind, wobei die Bewegung des Diffusors relativ zu dem Verteiler innerhalb des vorgegebenen Segments des Bandes oder Filaments In ähnlicher Weise messbar ist, wobel die Menge an aktiver Substanz, die auf dem Diffusor abgelagert wird, grob und bei Bedarf einstellbar ist, indem man die mechanische Struktur des Verteilers verändert, und fein und kontinuierlich einstellbar ist, indem man die Zeit reguliert, in der die aktive Verbindung auf den Diffusor aufgegeben wird und die Geschwindigkeit des Voranschreitens des Diffusors, so dass dort sowohl die Bewegung des Bandes oder Filaments und die Betriebszeit des einzelnen Verteilers zum Verteilen der aktiven Substanz auf dem Diffusor durch einen Mikroprozessor auf der Basis von vorgegebenen Zeitprogrammen kontrolliert, wobei das Programm als Variable Umgebungsparameter aufweist, welche durch geeignete Sensoren, die mit dem Mikroprozessor verbunden sind, gemessen werden;
- dass die Sensoren für optische oder andere Signale, die auf den Diffusor aufgedruckt sind, mit dem Mikroprozessor verbunden sind.

2. Anlage nach Anspruch 1, worin das Diffusorfilament oder -band auf Kunststoffbasis hergestellt ist.

3. Anlage nach Anspruch 1 oder 2, **dadurch gekennzeichnet, dass** der Diffusor auf einer Metallkonstruktion basiert.

4. Anlage nach Anspruch 1 oder 2 oder 3, worin der Diffuser aus Kunststoff und Metall hergestellt ist.

5. Anlage nach Anspruch 1, worin die einzelnen Segmente, die der Diffusion der spezifischen aktiven Substanz dienen, durch das optische Lesen von Barcodes, die auf dem Diffusor aufgedruckt sind, örtlich zugeordnet werden.

6. Anlage nach Anspruch 1 oder 4, worin die individuellen Segmente, die der Verteilung der spezifischen aktiven Substanz dienen, durch magnetische Leseoperationen erkannt werden.

7. Anlage nach Anspruch 1, worin falls Diffusion einer einzelnen Substanz oder die Diffusion von kompatiblen Substanzen, die nacheinander auf demselben Diffusorsegment zu verteilen sind, benötigt wird, es nicht notwendig ist, die vorgegebenen Segmente zu identifizieren und deshalb die Signale und die Ausrüstung, die hierzu gehört, nicht benötigt wird, wobei das Voranschreiten des Diffusors auf der Basis der Umdrehungen oder Teilen von Umdrehungen des Antriebsriemens oder eines angetriebenen Riemens bestimmt wird.

8. Anlage nach einem der Ansprüche 1, 2, 3, 4, 5, 6 und 7, worin die aktive Substanz, die zu verteilen ist, eine phytopharmazeutische Substanz für die Bekämpfung von Cryptogamen ist.

9. Anlage nach Anspruch 1, 2, 3, 4, 5, 6, 7, und 8, worin die aktive Substanz, die zu verteilen ist, eine phytopharmazeutische Substanz für die Bekämpfung von parasitären Insekten ist.

10. Anlage nach Anspruch 1, 2, 3, 4, 5, 6, 7, 8 und 9, worin die aktive Substanz, die zu verteilen ist, ein Pflanzenwachstumsregulator ist.

11. Anlage nach Anspruch 1, 2, 3, 4, 5, 6, 7, 8, 9 und 10, worin die aktive Substanz, die zu verteilen ist, ein Lockstoff für Pronubainsekten ist.

12. Anlage nach Anspruch 1, worin die Substanzen, die zu verteilen sind, fest sind, wobei das Beladen dadurch bewirkt wird, dass der Feststoff gegen den sich bewegenden Diffusor reibt.

13. Anlage nach Anspruch 1, worin der Diffusor mit der flüssigen, aktiven Substanz beladen wird, die in dem Verteilerreservoir enthalten ist, indem die Spitze des Verteilers mit dem Diffusor in Kontakt gebracht wird oder indem die Spitze an dem Diffusor reibt, während er sich in Ruhe befindet oder bewegt, wobei die Spitze aus einem Bündel von Fasern hergestellt ist, welches in der Lage ist, die die aktive Substanz darstellende Flüssigkeit zu absorbieren und auf den Diffusor zu übertragen.

14. Anlage nach Anspruch 1 oder 12 oder 13, worin der Diffusor mit der flüssigen, aktiven Substanz beladen wird, die in dem Verteilerreservoir enthalten ist, indem die Spitze des Verteilers mit dem Diffusor in Kontakt steht oder an diesem vorbeigleitet, während dieser in Ruhe ist oder sich bewegt, wobei die Spitze aus einem Ball gefertigt ist, dessen Oberfläche in Kontakt mit der Flüssigkeit in der Lage ist, benetzt zu werden und die die aktive Substanz darstellende Flüssigkeit auf den Diffusor zu übertragen.

15. Anlage nach Anspruch 1 oder 12 oder 13 oder 14, worin der Diffusor mit der flüssigen, aktiven Substanz, die in dem Verteilerreservoir enthalten ist, beladen wird mittels eines Strahls an kleinen Mengen der die aktive Substanz darstellenden Flüssigkeit.

16. Anlage nach Anspruch 1, worin die Umweitparameter, die von den Sensoren gemessen werden, die mit dem Mikroprozessor verbunden sind, die Konzentration der aktiven Substanz beinhalten, die mittels eines elektronischen Sensors gemessen wird.

17. Anlage nach Anspruch 1, worin die Anlagenfunktionen drahtlos gesteuert bzw. geregelt werden mit einer Steuer- bzw. Regelzentrale, welche nicht benachbart zu der Stelle, die von der Verteilung der aktiven Substanz betroffen ist, gelegen ist.

18. Anlage nach Anspruch 1, worin der Diffusor entlang seines Wegs gestützt und geführt wird mittels Rollen und Ösen, wobei er unter einer Spannung mittels Spannelementen gehalten wird und von einem oder mehreren Antriebsbändern angetrieben wird.

19. Anlage nach Anspruch 1, worin auf dem Diffusor Segmente vorhanden sind, welchen Pheromone, Insektizide, Fungizide, Akarizide, Phytoregulatore und Abwehrstoffe zugewiesen sind.

20. Anlage nach Anspruch 1, worin die Umgebung, in der diffundiert wird, für Produktschutz verwendet wird.

## Revendications

1. Installation destinée à l'apport régulé de substances actives vaporisables aux cultures et à la lutte contre les parasites, dans l'agriculture, comprenant un diffuseur, un système d'apport, des capteurs d'un signe optique ou autre et un microprocesseur, **caractérisée en ce que**
- le diffuseur se présente sous la forme d'un ruban ou d'un filament d'importante longueur, dont les extrémités se rejoignent pour former une ligne continue fonctionnant en circuit fermé, placée dans l'environnement qui fait l'objet de la diffusion, ce diffuseur étant susceptible de glisser le long d'une trajectoire prédéterminée grâce à des mécanismes de traction, des signes optiques ou autres étant imprimés sur des segments prédéterminés du diffuseur, ces signes optiques ou autres étant dédiés à la localisation des segments dédiés à la diffusion d'une substance unique et à la commande du déplacement du diffuseur par rapport aux distributeurs de substances actives ;
- le système d'apport de substances actives étant disposé le long de la trajectoire du diffuseur, ce système comprenant des distributeurs susceptibles de transférer de petites quantités de substance active à vaporiser sur de petites parties de segments prédéterminés du ruban ou filament mobile utilisé comme diffuseur, ces segments étant dédiés exclusivement à la diffusion d'une substance unique et étant repérables sur le ruban ou filament grâce à un lecteur optique ou magnétique, le déplacement du diffuseur par rapport au distributeur, à l'intérieur du segment dédié du ruban ou filament pouvant être mesuré, de même, la quantité de substance active déposée sur le diffuseur pouvant être ajustée, de façon grossière et occasionnelle, en modifiant la structure mécanique du distributeur, et pouvant être ajustée, de façon précise et en continu, en régulant le temps requis pour distribuer le composé actif sur le diffuseur et la vitesse d'avance du diffuseur, le déplacement du ruban ou filament et la durée de fonctionnement de chaque distributeur, lorsqu'il distribue la substance active sur le diffuseur, étant tous deux contrôlés par un microprocesseur, sur la base de programmes de temporisation prédéfinis dont les variables sont des paramètres environnementaux mesurés à l'aide de capteurs adaptés connectés au microprocesseur ;
- les capteurs de signes optiques ou autres imprimés sur le diffuseur étant connectés au microprocesseur.

2. Installation selon la revendication 1, dans laquelle le filament ou ruban formant diffuseur est constitué en matière plastique.

3. Installation selon la revendication 1 ou 2, dans laquelle le diffuseur est constitué en métal.

4. Installation selon la revendication 1 ou 2 ou 3, dans laquelle le diffuseur est constitué en matière plastique et en métal.

5. Installation selon la revendication 1, dans laquelle les différents segments dédiés à la diffusion de la substance active spécifique sont localisés par lecture optique de codes barres imprimés sur le diffuseur.

6. Installation selon la revendication 1 ou 4, dans laquelle les différents segments dédiés à la diffusion de la substance active spécifique sont localisés par lecture magnétique.

7. Installation selon la revendication 1, dans laquelle, si la diffusion d'une substance unique ou la diffusion de substances compatibles à diffuser successivement sur le même segment de diffuseur, est requise, il n'est pas nécessaire d'identifier les segments dédiés et, par conséquent, les signaux et l'équipement associé à ces opérations ne sont pas nécessaires, l'avancement du diffuseur pouvant être évalué sur la base des révolutions ou des révolutions partielles de la poulie d'entraînement ou d'une poulie entraînée.

8. Installation selon les revendications 1, 2, 3, 4, 5, 6 et 7, dans laquelle la substance active à diffuser est une substance phytopharmaceutique destinée à lutter contre les cryptogames.

9. Installation selon selon les revendications 1, 2, 3, 4, 5, 6, 7 et 8, dans laquelle la substance active à diffuser est une substance phytopharmaceutique destinée à lutter contre les insectes parasites.

10. Installation selon les revendications 1, 2, 3, 4, 5, 6, 7, 8 et 9, dans laquelle la substance active à diffuser est un régulateur de développement végétal.

11. Installation selon les revendications 1, 2, 3, 4, 5, 6, 7, 8, 9 et 10, dans laquelle la substance active à diffuser est un appât pour les insectes du type "pronuba".

12. Installation selon la revendication 1, dans laquelle les susbtances à diffuser sont solides, l'apport s'effectuant en frottant le solide contre le diffuseur en mouvement.

13. Installation selon la revendication 1, dans laquelle le diffuseur est chargé avec la substance active liquide contenue dans le réservoir du diffuseur par contact ou frottement de la pointe du distributeur lorsque celui-ci est immobile ou en mouvement, cette pointe étant fabriquée à partir d'un écheveau de fibres susceptibles d'absorber et de transférer sur le diffuseur le liquide constituant la substance active.

14. Installation selon la revendication 1 ou 12 ou 13, dans laquelle le diffuseur est chargé avec la substance active liquide contenue dans le réservoir du distributeur par contact ou glissement de la pointe du distributeur contre le diffuseur, lorsque celui-ci est immobile ou en mouvement, cette pointe étant fabriquée à partir d'une boule dont la surface qui se trouve en contact avec le liquide est susceptible d'être mouillée avec le liquide constituant la substance active, et de le transférer sur le diffuseur.

15. Installation selon la revendication 1 ou 12 ou 13 ou 14, dans laquelle le diffuseur est chargé avec la susbtance active liquide contenue dans le réservoir du distributeur grâce à un jet de petites quantités du liquide constituant la substance active.

16. Installation selon la revendication 1, dans laquelle les paramètres environnementaux mesurés par les capteurs connectés au microprocesseur comprennent la concentration en substance active mesurée par un capteur électronique.

17. Installation selon la revendication 1, dans laquelle les fonctions de l'installation sont commandées par contact radio dont le centre de commande n'est pas adjacent au site concerné par la diffusion de substance active.

18. Installation selon la revendication 1, dans laquelle, le long de sa trajectoire, le diffuseur est supporté et guidé par des rouleaux et des oeillets et est maintenu sous tension par des éléments de tension et entraîné par une ou plusieurs poulies d'entraînement.

19. Installation selon la revendication 1, dans laquelle se trouvent, sur le diffuseur, des segments dédiés aux phéromones, insecticides, fongicides, acaricides, phytorégulateurs et substances répulsives.

20. Installation selon la revendication 1, dans laquelle l'environnement qui fait l'objet de la diffusion est utilisé pour la protection du produit.
